# EUROPEAN PATENT SPECIFICATION

(11) **EP 3 078 474 B1**
(45) Date of publication and mention of the grant of the patent: **27.02.2019**
(21) Application number: 15162599.3
(22) Date of filing: 07.04.2015
(51) Int. Cl.: B29C 43/02, B29C 43/04, B29C 43/00

(54) **METHOD FOR PRODUCING AN ELEMENT MADE OF COMPOSITE MATERIAL AND ELEMENT PRODUCED BY SUCH A METHOD**
VERFAHREN ZUM HERSTELLEN EINES ELEMENTS AUS VERBUNDWERKSTOFF UND DURCH SOLCH EIN VERFAHREN HERGESTELLTES ELEMENT
PROCÉDÉ DE PRODUCTION D'UN ÉLÉMENT CONSTITUÉ D'UN MATÉRIAU COMPOSITE ET ÉLÉMENT PRODUIT PAR UN TEL PROCÉDÉ

(43) Date of publication of application: 12.10.2016
(73) Proprietor: Faurecia Exteriors GmbH, 31655 Stadthagen (DE)
(72) Inventor: Zapf, Armin, 91414 Neustadt/Aisch (DE)
(74) Representative: LLR

(56) References cited:
- DE-A1-102012 111 488
- DE-T2- 60 128 051
- DE-T2- 68 919 466
- JP-A- 2009 013 628
- US-A- 4 014 970
- US-A1- 2012 018 914

## Description

The present invention relates to a method for producing an element made of composite material and to an element produced by this method.

Often, when elements made of composite material are intended to be connected or attached together, an additional thermoplastic material is added between these elements to be used as a welding material for interconnecting these elements by a welding process. The composite material, comprising fibers, is indeed not adapted to be used as a welding material.

Therefore, in order to attach two elements made of composite material, an additional thermoplastic material should be added from the outside of the two elements to be attached together, which means, amongst others, that the assembly requires more material and is made heavier.

One challenge of interconnected elements is to control the connection of the two elements in order to provide a solid interconnection, i.e. a strong and resistant attachment between the elements.

However, using a thermoplastic material added from outside the composite elements introduces an additional parameter to be controlled in order to achieve an acceptable interconnection between the two elements to be connected, in addition to requiring a greater quantity of thermoplastic material in the assembly.

Therefore, it is preferable to avoid adding an external thermoplastic material for welding together two elements made of composite material.

Such a solution is proposed by document DE 3913723, which discloses a method for producing two elements made of composite material comprising thermoplastic material. The two elements are attached by a welding process. This document teaches to increase the contact surface between the elements made of composite material to be connected, by cutting cavities into the contact surface.

However, this method provides a contact surface with cavities and elevations in which the amount of thermoplastic material is relatively low, meaning that there is not enough welding material to guaranty a strong weld between the two elements. In consequence, the interconnection of the two elements using this welding technique is not solid enough and remains unsatisfactory.

Accordingly, one of the aims of the present invention is to provide an element made of composite material which has been attached to another element in an efficient and solid manner.

This object is achieved with a method for assembling a first element made of composite material to a second element according to claim 1.

The advantages of such a method for producing an element made of composite material are various and are resumed here-after in a non-exhaustive way.

By using the method according to the invention it is possible to produce an element made of composite material comprising reinforcing fibers in a core of the element and comprising ribs on an outer surface of the element made of thermoplastic material displaced from the blank by the compression of the compression area A. As the ribs contain no or only a small amount of reinforcing fibers, they are particularly suitable to be used as welding material during an interconnection welding process to connect the element obtained by the method of the invention with another element. As no external thermoplastic material is added during the welding, the interconnection can be precisely controlled and the amount of material in the assembly is reduced. Therefore, a better interconnection, or attachment, of two elements made of composite material can be provided with less material than in a conventional welding process.

The ribs of the element made of composite material have a shape allowing increasing of shear forces once interconnected to a complementary element. Therefore the reliability of the interconnection of the two elements made of composite material is increased.

The rib or ribs of the element may comprise a surface which has a micro structure allowing microscopic interconnection with the microstructure surface of the rib or ribs of another element. This microscopic interconnection can increase forces between the two interconnected elements.

Another advantage of this method is that during the shaping of the rib or ribs on one of the faces of the element, the opposite face of the element is not affected. Alternatively, if the opposite face is affected, it can be readjusted. In both cases, the opposite face of the element, which does not comprise ribs, keeps an esthetically satisfactory appearance.

According to other preferred features of the method according to the invention:
- heat is applied to the thermoplastic material of the blank before or during the shaping of the blank;
- a first force F1 is applied on the first part, and a second force F2 is applied on the second part being opposite to the first force F1, during the shaping of the blank such that a volume of thermoplastic material below a top surface plane SP of the blank is directed in the rib forming area to form a rib above the surface plane SP;
- the first part of the mold penetrates about a distance D1 into the compression area A of the blank in the closed position of the mold, during the shaping of the blank;
- the step of retrieving is followed by a step of assembling of the element with a second element, using at least one fastening technique out of the group: chemical fastening, mechanical fastening and thermal fastening;
- the mold is arranged such that at least an area of the blank is compressed between the first and second parts of the mold such that a part of the thermoplastic material of the blank is directed into at least a two ribs forming area of the mold cavity wherein the ribs made only of thermoplastic material are formed during the shaping of the blank;
- during shaping of the blank, the rib is shaped with at least two substantially straight lateral flanges, forming an angle α with a Z-axis substantially perpendicular to a top surface plane of the element, the rib protruding from said top surface plane, the angle α being comprised between 0° to 5°, preferably between 0.5° and 5°;
- a surface with micro structures is formed on the rib during the step of shaping the blank;
- the compression area A is located adjacent to the rib;
- the compression area A is located on a top surface plane SP of the blank around and/or close to a rib;
- the compression area B is located on a bottom surface plane SP' of the blank opposite to a location of the rib or close to an opposite to a location of the rib.

The invention also relates to an assembly produced by the method described above and wherein the element comprises at least one rib of thermoplastic material and one compression area A forming a cavity on the element, the volume of the cavity being substantially equal to the volume of the rib.

The element according to the invention can comprise one or several of the following features which can be taken solely or according to any technically possible combination:
- the compression area A is located adjacent to the rib;
- the compression area A is located on a top surface plane SP of the element around and/or close to the rib;
- a compression area B is located on a bottom surface plane SP' of the element opposite to a location of the rib or close to an opposite location of the rib.

The invention will now be described in detail with reference to the drawings, wherein:
- figure 1 shows a blank made of composite material used for producing the element according to the invention;
- figure 2 shows an element made of composite material produced with the method of the present invention;
- figure 3 shows an alternative element made of composite material produced with an another embodiment of the method according to the invention;
- figure 4 shows the alternative element of figure 3;
- figure 5 shows a mold for producing the element of figure 2;
- figure 6 shows an assembly of two elements of figure 2;
- figure 7a shows a chemical assembly of the element of figure 2 with a possible counterpart;
- figure 7b shows a chemical assembly of the element of figure 2 with an identical counterpart;
- figure 7c shows a thermal assembly of the element of figure 2 with a counterpart;
- figure 7d shows a mechanical assembly of the element of figure 2 with an identical counterpart.

In the drawings, a first direction is identified by a longitudinal axis X. A second direction, perpendicular to the first direction, is identified by an axis Z, and a transversal direction, perpendicular to the first and second directions, by a an axis Y. The axes X and Y are for example horizontal axes and the axis Z is for example a vertical axis. The wording "laterally" or "adjacent" refers to an object placed next to another object on a plane defined by the X-axis and Y-axis.

In the present description, the terms "up", "upward" and "above" are defined according to the direction of the positive Z-axis. The terms "low", "lower" and "below" are defined according to the direction of the negative Z-axis.

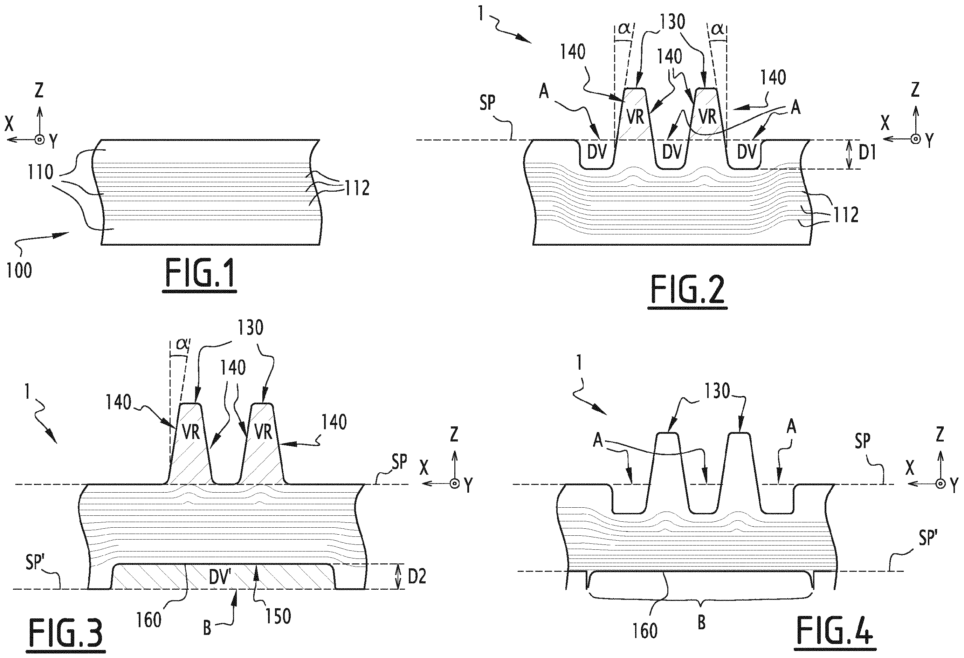

With reference to figure 1, there is shown a blank 100 made of composite material which is used for producing an element 1 made of composite material. As known per se, the composite material comprises reinforcing fibers 112 which are embedded in a thermoplastic material 110. The composite material can be any kind of known composite material. The reinforcing fibers are for example glass-, carbon-, basalt-, aramid- high-temperature-polymer-, steel-, natural- or any other known reinforcing fibers in a woven or non-woven style, in form of layers of unidirectional fibers or in form of a mix of two or more of those types.

The blank 100 has a top surface plane SP defined by the X-axis and the Y-axis. The top surface plane SP defines a front side of the blank 100.

The blank 100 has also a bottom surface plane SP' parallel to the top surface plane SP. The bottom surface plane SP' defines a back side of the blank 100.

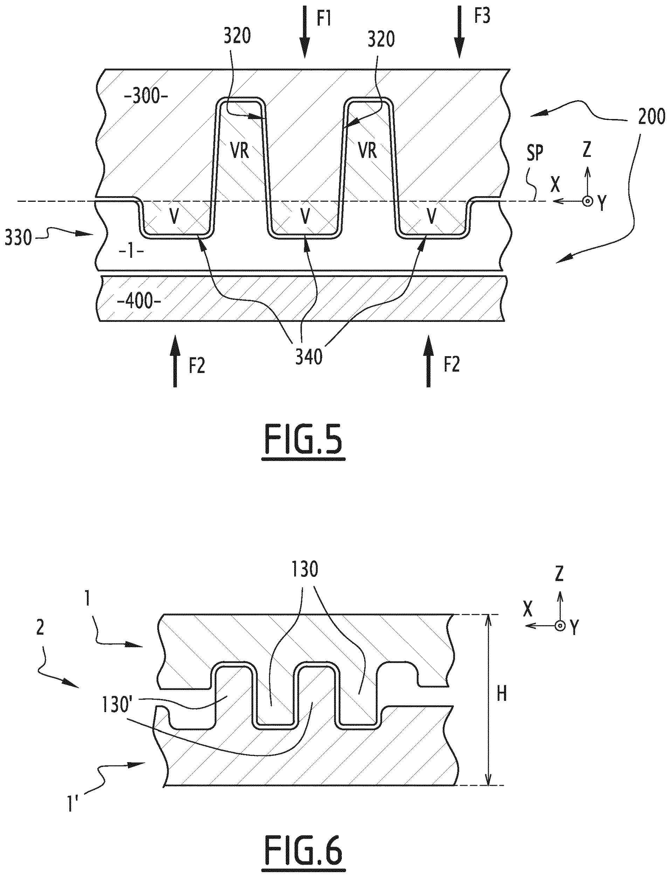

Figure 5 shows a mold 200 comprising a first part 300 and a second part 400 which are configured for receiving the blank 100 in between.

The first part 300 and the second part 400 are movable relative to each other between an opened position, wherein the first and second parts are spaced from each other, and a closed position, wherein the first part 300 and the second part 400 define together a molding cavity 330 having the shape of the element to be produced.

The mold cavity 330 has at least one rib forming area 320 wherein a rib 130 can be formed.

According to the embodiment shown in figure 5; the rib forming area 320 extends on the first part 300 of the mold 200, and comprises at least one recess having the shape of the rib to be produced. The first part 300 of the mold 200 also comprises at least one protrusions 340 extending on one side of the rib forming area 320. The protrusion 340 extends below the surface plane SP of the blank when the mold 200 is in its closed position. According to the embodiment shown in figure 5, the first part 300 comprises two protrusions 340 extending on either side of the rib forming area 320 and below the surface plane SP of the blank when the mold 200 is in its closed positions.

In the opened position of the mold 200, the blank 100 can be inserted between the first part 300 and the second part 400 of the mold.

In the following, a method for producing the element 1 according to the invention will be described.

At the beginning of the method, the blank 100 made of composite material and comprising the reinforcing fibers 112 and thermoplastic material 110 is provided.

In a first step, the blank 110 is placed in the mold 200, which is in its open position, between the first part 300 and the second part 400.

Then, the first part 300 and the second part 400 are moved in the closed position of the mold 200.

During and/or before the step of placing the blank 100 into the mold 200 heat is applied to the blank 100 and/or to the mold 200 for heating the composite material. During the application of heat, the blank 100 is heated and becomes malleable, meaning that the blank is able to acquire the shape of the molding cavity in the malleable state of the blank. More particularly, the heating temperature is arranged such that at least a part of the thermoplastic material of the composite material becomes viscous or liquid such that said material is able to flow.

Then, a step of shaping the blank 100 follows in which the mold 200 is placed in the closed position. During this step, the blank 100 is deformed into the shape of element 1.

The step of shaping the blank 100 is now described in greater detail.

When the mold 200 is placed in the closed position, as shown on figure 5, a first force F1 is applied from above on the first part 300, and a second force F2 is applied from below on the second part 400 being opposite to the first force F1, meaning that the blank is compressed between the first and second parts of the mold 200. The first force F1 and the second force F2 are applied on the blank 100 such that the protrusions 340 of the first part 300 of the mold 200 penetrate into the top surface plane SP of the blank 100.

A compression area A, shown in figure 2, is defined on the top surface plane SP as being the contact area between the blank 100 and the protrusions 340 of the first part 300 of the mold 200 during the step of shaping the blank 100.

Consequently, during the shaping of the blank 100 the blank 100 is compressed in at least at one compression area A between the first and second parts 300, 400 of the mold 200.

The protrusion 340 of the first part 300 penetrates until a predefined depth in the compression area A of the blank 100 is reached.

According to the described embodiment, the protrusions 340 enter about a distance D1 into the blank 100 below the top surface plane SP. The penetration of the protrusions 340 pressurizes the deformable blank 100 such that a displaced volume DV of the thermoplastic material 110 of the blank 100, which is able to flow as explained previously, is directed from an initial position situated below the top surface plane SP into the rib forming area 320 of the mold 200 to form a rib 130 having a volume VR above the top surface plane SP.

The reinforcing fibers 112 of the blank 100 substantially do not enter into the rib volume VR since only the thermoplastic material of the composite material flows into the rib forming area 320. Consequently, rib(s) made mainly of thermoplastic material are obtained, the thermoplastic material of the rib(s) being displaced and coming from the blank by the compression of the compression area A. According to an embodiment, the rib is made mainly of thermoplastic material and comprises almost no fibers at all.

The rib 130 which is formed inside the rib forming area 320 of the molding cavity 330 is shaped with at least two straight lateral flanges 140 each defining a surface plane which is nearly perpendicular to the top surface plane SP.

In more detail, each surface plane of both lateral flanges 140 of the rib 130 defines an angle α comprised between 0° to 5°, preferably 0.5° to 5°, with axis Z, which is substantially perpendicular to the top surface plane SP. The preferred angle α between 0.5 and 5° allows to easily retrieving the element formed by the mold 200 once the mold 200 is in the opened position.

The rib forming area 320 of the cavity 330 of the mold 200 allows forming the rib 130 in such a way that the rib 130 preferably has no sharp edges. This allows keeping the mold 200 free of thermoplastic residues during a step of retrieving the element 1 form the mold 200.

During the step of shaping the blank 100, the rib 130 formed by the mold 200 is preferably formed with flanges 140 containing microstructures at least for non-welding applications. By microstructures, it is meant that the surfaces of the flanges 140 are not smooth and comprise small reliefs or embossments. These microstructures are obtained thanks to the cavity 330 of the mold 200 which also has a surface with microstructures. In this case, a microfit surface can be formed, able to fit with a second microfit surface. The microfit surface of the ribs allows enhanced forces between a first and a second element 1, 1' during a step of assembling these elements together mainly by a non-welding assembly process like gluing or mechanical fixation with a complementary element.

In an alternative embodiment, during the step of shaping of the element 1, air can be included in the rib volume VR of the rib 130. This allows obtaining a rib volume VR greater than the displaced volume VR with a constant amount of thermoplastic material. The advantage of such an increased rib volume is that enlarged flanges 140 on the rib 130 allow increasing shear forces once the element 1 is connected to a complementary element. This embodiment is particularly interesting in low strength gluing.

During the step of shaping the blank 100, no thermoplastic material is added from outside the mold 200 into the mold 200. This allows to better control the shape of the rib 130 shaped during the step of shaping the blank. Furthermore, the method for producing the rib is furthermore simplified since the rib is produced during the shaping of the blank, instead of being for example overmolded on an already formed element as known in the prior art. Consequently, the method according to the invention is faster and simpler than the method of the prior art.

Once the element 1 is shaped and the material of element 1 is cooled down such that the element becomes substantially rigid, a step of retrieving the element 1 from the mold 200 can be started.

During the step of retrieving, the mold 200 is moved into its open position and the shaped element 1 is retrieved from the mold. Thanks to the shape of the rib forming area 320 of the mold 200, the mold is clean and free of thermoplastic residues once the element 1 is retrieved.

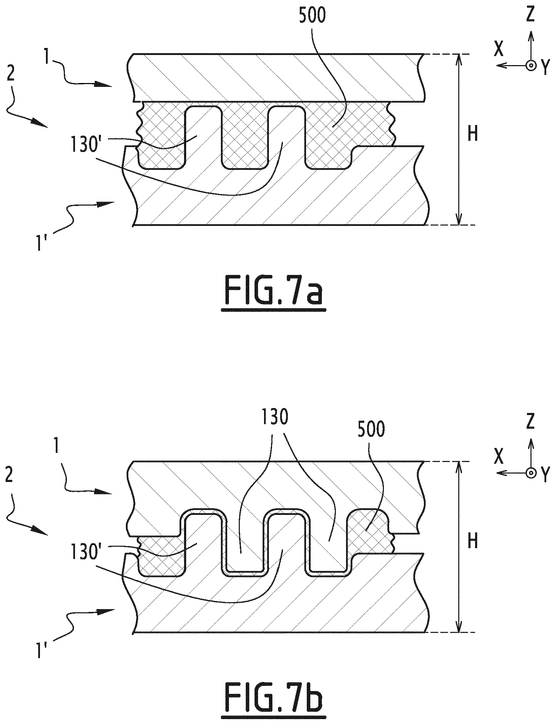

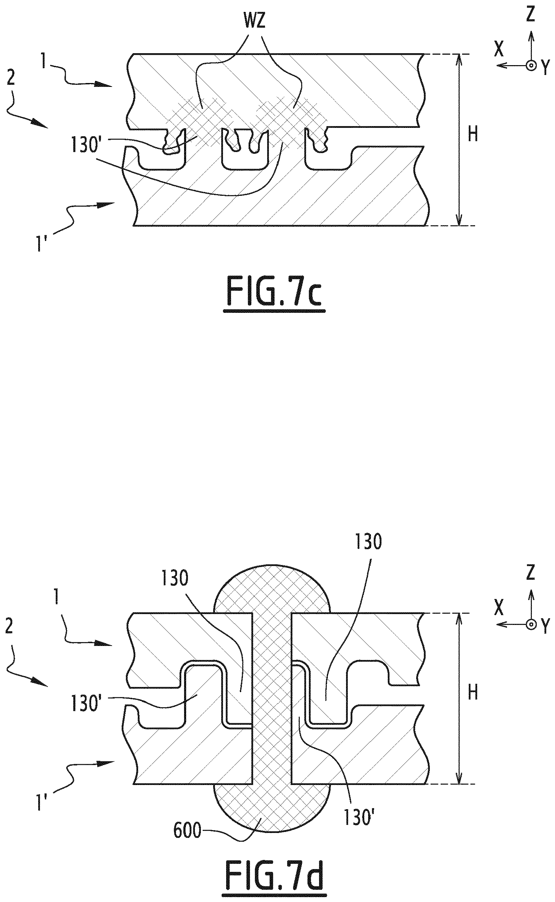

Finally, the produced first element 1 and a second element 1' can be assembled. The first element 1 or the second element 1' can be a flat element, as shown on figure 7a and 7c.

During this step of assembling, the first element 1 is attached to the second element 1', for example a flat element or an element produced by the same method.

The step of assembling may comprise a step of aligning the first element 1 and the second element 1'.

The step of assembling may comprise a step of pressing together of the first element 1 and the second element 1'.

After the step of assembling, the assembled first and second elements 1, 1' have a height H measured along the Z-axis. This height H can be smaller than in ordinary assembled elements made of composite material in which thermoplastic material has been added during a step of assembling.

The step of assembling the first element 1 and second element 1' comprises a welding connection technique as ultrasonic welding or vibrational welding, but also other technologies like IR-, hot-gas-, laser-welding etc. can be used. In this case, the welding material is the thermoplastic material forming the ribs and no external welding material is needed. In this case, a welding zone WZ will be formed at the intersection of the first element 1 and the second element 1', forming a mixture of each element material (see figure 7c). Furthermore, the surplus of welding material can also flow in the recesses formed around the ribs.

In one alternative embodiment, the rib 130 may have lateral flanges 140 which are formed in a wave like manner. This wave like flanges allows more adhesion between the assembled first and second elements 1,1' after the step of assembling.

In one embodiment, the element 1 shows two ribs 130 which have been formed during the step of shaping the blank 100. In this case, the mold 200 is arranged such that at least the compression area A of the blank 100 is compressed between the first and second parts 300, 400 of the mold 200 such that a part of the thermoplastic material of the blank 100 is directed in at least two rib forming areas of the mold cavity 330 wherein the ribs 130 are made only of thermoplastic material which are formed during the step of shaping the blank 100. Alternatively, several compression areas A can be provided around the rib forming areas of the mold cavity 330. When the element comprises more than one rib, during the step of assembling two comparable elements 1, 1' the two elements 1, 1' are automatically aligned due to interlocking of the ribs 130 of the first and second elements 1, 1'.

Therefore, during the assembling of the element 1, 1', wrong positioning of the first element towards the second element 1' is less possible. Before assembling, the 3D-structure of the elements can help automated handling and/or positioning systems to localize better the position of the assembly areas.

Figure 6 shows an assembled first element 1 and second element 1' having both two ribs. The ribs 130 and 130' of the elements 1, 1' are interlocked. Such an assembly allows attachment of two elements 1, 1' made of composite material in an efficient manner.

One advantage of forming at least two ribs 130 on the blank 100 is to reduce the assembling tolerances of a first element 1 and second element 1'. This leads to less consumption of glue 500, in the case of assembling first and second elements 1, 1' with glue 500.

In the embodiment described above, the compression area(s) A is (are) located on the top surface plane SP of the blank 100 and surrounds the rib 130 on the surface plane SP.

In another embodiment, at least one compression area(s) is located on the opposite face of the element, i.e. on the face which does not comprises the ribs.

In this embodiment, a lower compression area B is located opposite to the top surface plane SP on a bottom surface plane SP', as shown in figure 3. However, the lower compression area B can also be located elsewhere on the top surface plane SP or the bottom surface plane SP'. For example, the compression area B is located on the bottom surface plane SP' of the element 1 opposite to a location of the rib or close to an opposite location of the rib 130. Close to an opposite location of the rib 130 can be a location which is not inside an area on the bottom surface plane SP' defined by a vertical projection along the Z-axis of the ribs on the bottom surface plane SP'.

In this case, the second part 400 of the mold 200 comprises a protrusion (not shown) extending into a direction parallel to the Z-axis. This protrusion has a height D2 of preferably in a dimension so that the volume of all ribs and of the protrusions are about the same.

In this case, during the step of shaping the blank 100, the protrusion of the second part 400 penetrates about a depth D2 into the lower surface plane SP' at the lower compression area B. This forms a lower cavity 150 having a depth D2 measured from the bottom surface plane SP'. The lower cavity 150 has also a ground surface 160 which is parallel to the bottom surface plane SP' and situated at a depth D2. This causes the thermoplastic material of the composite material to move from the lower compression area B to the rib forming area of the molding cavity, thereby forming the rib 130.

During the step of shaping the blank 100, a first force F1 is applied on the first part 300 and a second force F2 is applied on the second part 400 being opposite to the first force F1.

During this step of shaping the blank 100 at least one rib 130 is formed above the top surface plane SP of the blank 100.

This rib 130 is made of thermoplastic material 110 which is directed from the lower compression area B into the rib forming area 320 of the mold cavity 130.

The volume of the cavity 150 defines a lower displaced volume DV'. The thermoplastic material 110 of this volume DV' is directed into the rib forming area 320.

According to an embodiment, the thermoplastic material forming the rib may come from both an upper compression area A and from a lower compression area B, as shown in the embodiment of figure 4.

It should be noted that in every embodiment, the volume of the thermoplastic material forming the rib 130 is substantially equal to the volume of thermoplastic material displaced from the compression area(s).

It should also be noted that in every embodiment, the displaced volume DV and DV' can only be directed into the rib forming area 320 of the mold 200.

## Claims

1. A method for assembling a first element (1) made of a composite material to a second element (1') made of a composite material, comprising the steps of :
a) producing the first element (1) made of a composite material, the composite material or its precursor comprising reinforcing fibers (112) embedded in a thermoplastic material (110), the method of producing said element (1) comprising :
- providing a blank (100) made of composite material,
- placing the blank (100) in a mold (200) comprising a first part (300) and a second part
(400) movable relative to each other between an opened position and a closed position,
wherein the first part (300) and the second part (400) define together a molding cavity (330) having the shape of the element to be produced,
- shaping the blank (100) to the shape of the element to be produced by moving the mold (200) in the closed position,
- retrieving the element from the mold (200) in the opened position, the mold (200) being arranged such that at least a compression area A of the blank (100) is compressed between the first and second parts (300, 400) of the mold (200) such that a part of the thermoplastic material of the blank (100) is directed in at least one rib forming area (320) of the mold cavity (330) wherein a rib (130), made of the thermoplastic material displaced from the blank by the compression of the compression area A, is formed during the shaping of the blank (100),
wherein a first force F1 is applied on the first part (300), and a second force F2 is applied on the second part (400) being opposite to the first force F1, during the shaping of the blank (100) such that a volume of thermoplastic material below a top surface plane SP of the blank (100) is directed in the rib forming area to form a rib above the surface plane SP,
b) assembling the first element (1) to the second element (1') by welding, the welding material being the thermoplastic material forming the rib (130) of the first element (1)

2. A method according to claim 1, wherein heat is applied to the thermoplastic material
(110) of the blank (100) before or during the shaping of the blank (100).

3. A method according to claim 1 to 2, wherein the first part (300) of the mold (200) penetrates about a distance D1 into the compression area A of the blank (100) in the closed position of the mold (200), during the shaping of the blank (100).

4. A method according to claim 1 to 3, wherein the mold (200) is arranged such that at least an area of the blank (100) is compressed between the first and second parts (300, 400) of the mold (200) such that a part of the thermoplastic material of the blank (100) is directed into at least a two ribs (130) forming area of the mold cavity (330) wherein the ribs (130) made only of thermoplastic material are formed during the shaping of the blank (100).

5. A method according to claim 1 to 4, wherein during shaping of the blank (100) the rib (130) is shaped with at least two substantially straight lateral flanges (140), forming an angle or with a Z-axis substantially perpendicular to a top surface plane (SP) of the element, the rib protruding from said top surface plane (SP), the angle or being comprised between 0° to 5°, preferably between 0.5° and 5°.

6. A method according to claim 1 to 5, wherein a surface with micro structures is formed on the rib (130) during the step of shaping the blank (100).

7. A method according to any of claims 1 to 7, wherein the compression area A is located adjacent to the rib (130).

8. A method according to any of claims 1 to 7, wherein the compression area A is located on a top surface plane SP of the blank (100) around and/or close to a rib (130).

9. A method according to claims 1 to 8, wherein the compression area B is located on a bottom surface plane SP' of the blank (100) opposite to a location of the rib or close to an opposite to a location of the rib (130).

10. An assembly of a first element (1) and a second element (1') produced by a method according to claims 1 to 9, wherein the element (1) comprises at least one rib (130) of thermoplastic material and one compression area A forming a cavity on the element (1), the volume of the cavity being substantially equal to the volume of the rib (130).

11. An assembly according to claim 12, wherein the compression area A is located adjacent to the rib (130).

12. An assembly according to claim 10 or 11, wherein the compression area A is located on a top surface plane SP of the element (1) around and/or close to the rib (130).

13. An assembly according to any of claims 10 to 12, wherein a compression area B is located on a bottom surface plane SP' of the element (1) opposite to a location of the rib or close to an opposite location of the rib (130).

## Patentansprüche

1. Verfahren zum Zusammenfügen eines ersten Elements (1) aus einem Verbundwerkstoff mit einem zweiten Element (1') aus einem Verbundwerkstoff, folgende Schritte umfassend:
a) Herstellen des ersten Elements (1) aus einem Verbundwerkstoff, wobei der Verbundwerkstoff oder dessen Vorläufer Verstärkungsfasern (112) umfassen, die in ein thermoplastisches Material (110) eingebettet sind, wobei das Verfahren zum Herstellen des Elements (1) umfasst:
- Bereitstellen eines Rohlings (100) aus Verbundwerkstoff,
- Platzieren des Rohlings (100) in einer Form (200), die einen ersten Teil (300) und einen zweiten Teil (400) umfasst, die relativ zueinander zwischen einer geöffneten Position und einer geschlossenen Position bewegbar sind, wobei der erste Teil (300) und der zweite Teil (400) zusammen einen Formhohlraum (330) mit der Form des herzustellenden Elements begrenzen,
- Formen des Rohlings (100) zu der Form des herzustellenden Elements durch Bewegen der Form (200) in die geschlossene Position,
- Herausnehmen des Elements aus der Form (200) in der geöffneten Position, wobei die Form (200) so angeordnet ist, dass mindestens ein Kompressionsbereich A des Rohlings (100) zwischen dem ersten und zweiten Teil (300, 400) der Form (200) komprimiert wird, sodass ein Teil des thermoplastischen Materials des Rohlings (100) in mindestens einen Rippenformungsbereich (320) des Formhohlraums (330) gelenkt wird, wobei eine Rippe (130), die aus dem durch die Komprimierung des Kompressionsbereichs A aus dem Rohling verdrängten thermoplastischen Material gefertigt ist, während der Formgebung des Rohlings (100) gebildet wird,
wobei beim Formen des Rohlings (100) eine erste Kraft F1 auf den ersten Teil (300) und eine zweite Kraft F2 auf den zweiten Teil (400) aufgebracht wird, die der ersten Kraft F1 entgegengesetzt ist, sodass ein Volumen aus thermoplastischem Material unterhalb einer oberen Oberflächenebene SP des Rohlings (100) in den Rippenformungsbereich gelenkt wird, um eine Rippe oberhalb der Oberflächenebene SP zu bilden,
b) Zusammenfügen des ersten Elements (1) mit dem zweiten Element (1') durch Schweißen, wobei das Schweißmaterial das thermoplastische Material ist, das die Rippe (130) des ersten Elements (1) bildet.

2. Verfahren nach Anspruch 1, wobei vor oder während des Formens des Rohlings (100) Wärme auf das thermoplastische Material (110) des Rohlings (100) aufgebracht wird.

3. Verfahren nach Anspruch 1 bis 2, wobei der erste Teil (300) der Form (200) während des Formens des Rohlings (100) eine Distanz D1 in den Komprimierungsbereich A des Rohlings (100) in der geschlossenen Position der Form (200) eindringt.

4. Verfahren nach Anspruch 1 bis 3, wobei die Form (200) so angeordnet ist, dass mindestens ein Bereich des Rohlings (100) zwischen dem ersten und zweiten Teil (300, 400) der Form (200) komprimiert wird, so dass ein Teil des thermoplastischen Materials des Rohlings (100) in mindestens einen zwei Rippen (130) bildenden Bereich des Formhohlraums (330) gelenkt wird, wobei die nur aus thermoplastischem Material gefertigten Rippen (130) während der Formgebung des Rohlings (100) gebildet werden.

5. Verfahren nach Anspruch 1 bis 4, wobei während des Formens des Rohlings (100) die Rippe (130) mit mindestens zwei im Wesentlichen geraden Seitenflanschen (140) geformt wird, die einen Winkel bilden, oder mit einer Z-Achse, die im Wesentlichen senkrecht zu einer oberen Oberflächenebene (SP) des Elements verläuft, wobei die Rippe aus der oberen Oberflächenebene (SP) heraus ragt, wobei der Winkel zwischen 0° und 5°, vorzugsweise zwischen 0,5° und 5° beträgt.

6. Verfahren nach Anspruch 1 bis 5, wobei auf der Rippe (130) während des Schrittes des Formens des Rohlings (100) eine Oberfläche mit Mikrostrukturen gebildet wird.

7. Verfahren nach einem der Ansprüche 1 bis 7, wobei der Kompressionsbereich A angrenzend an die Rippe (130) angeordnet ist.

8. Verfahren nach einem der Ansprüche 1 bis 7, wobei der Kompressionsbereich A auf einer oberen Oberflächenebene SP des Rohlings (100) um eine und/oder nahe an einer Rippe (130) angeordnet ist.

9. Verfahren nach den Ansprüchen 1 bis 8, wobei der Kompressionsbereich B auf einer unteren Oberflächenebene SP' des Rohlings (100) gegenüber einer Position der Rippe oder nahe einer gegenüberliegenden Position der Rippe (130) angeordnet ist.

10. Anordnung aus einem ersten Element (1) und einem zweiten Element (1'), hergestellt nach einem Verfahren nach den Ansprüchen 1 bis 9, wobei das Element (1) mindestens eine Rippe (130) aus thermoplastischem Material und einen Kompressionsbereich A umfasst, der einen Hohlraum auf dem Element (1) bildet, wobei das Volumen des Hohlraums im Wesentlichen gleich dem Volumen der Rippe (130) ist.

11. Anordnung nach Anspruch 12, wobei der Kompressionsbereich A angrenzend an die Rippe (130) angeordnet ist.

12. Anordnung nach Anspruch 10 oder 11, wobei der Kompressionsbereich A auf einer oberen Oberflächenebene SP des Elements (1) um die und/oder nahe an der Rippe (130) angeordnet ist.

13. Anordnung nach einem der Ansprüche 10 bis 12, wobei ein Kompressionsbereich B auf einer unteren Oberflächenebene SP' des Elements (1) gegenüber einer Position der Rippe oder nahe an einer gegenüberliegenden Position der Rippe (130) angeordnet ist.

## Revendications

1. Un procédé pour assembler un premier élément (1) fait en un matériau composite à un deuxième élément (1') fait en un matériau composite, comprenant les étapes consistant à :
a) produire le premier élément (1) fait en un matériau composite, le matériau composite ou son précurseur comprenant des fibres de renforcement (112) noyées dans un matériau thermoplastique (110), le procédé de production dudit élément (1) comprenant :
- le fait de prévoir une ébauche (100) faite en un matériau composite,
- le fait de placer l'ébauche (100) dans un moule (200) comprenant une première partie (300) et une deuxième partie (400) mobiles l'une par rapport à l'autre entre une position ouverte et une position fermée, la première partie (300) et la deuxième partie (400) définissant ensemble une cavité de moulage (330) ayant la forme de l'élément à fabriquer,
- le fait de mettre en forme l'ébauche (100) à la forme de l'élément à produire en déplaçant le moule (200) en position fermée,
- le fait de récupérer l'élément depuis le moule (200) en position ouverte, le moule (200) étant agencé de telle sorte qu'au moins une zone de compression A de l'ébauche (100) soit comprimée entre les première et deuxième parties (300, 400) du moule (200) de telle sorte qu'une partie de la matière thermoplastique de l'ébauche (100) soit dirigée dans au moins une zone (320) de formation de nervure de la cavité du moule (330), une nervure (130), faite de la matière thermoplastique déplacée depuis l'ébauche par la compression de la zone de compression A, étant formée pendant la mise en forme de l'ébauche (100),
une première force F1 étant appliquée sur la première pièce (300), et une deuxième force F2, opposée à la première force F1, étant appliquée sur la deuxième partie (400) pendant la mise en forme de l'ébauche (100) de telle sorte qu'un volume de matière thermoplastique sous un plan de surface supérieure SP de l'ébauche (100) est dirigé dans la zone de formage de la nervure pour former une nervure au-dessus du plan de surface SP,
b) assembler le premier élément (1) au deuxième élément (1') par soudure, la matière de soudure étant la matière thermoplastique formant la nervure (130) du premier élément (1).

2. Un procédé selon la revendication 1, dans lequel de la chaleur est appliquée à la matière thermoplastique (110) de l'ébauche (100) avant ou pendant la mise en forme de l'ébauche (100).

3. Un procédé selon les revendications 1 à 2, dans lequel la première partie (300) du moule (200) pénètre sur environ une distance D1 dans la zone de compression A de l'ébauche (100) en position fermée du moule (200), pendant la mise en forme de l'ébauche (100).

4. Un procédé selon la revendication 1 à 3, dans lequel le moule (200) est agencé de telle sorte qu'au moins une zone de l'ébauche (100) est comprimée entre les première et deuxième parties (300, 400) du moule (200) de telle sorte qu'une partie de la matière thermoplastique de l'ébauche (100) est dirigée dans au moins une zone de formage de deux nervures (130) que comprend la cavité (330) du moule, de sorte que des nervures (130) faites uniquement de matière thermoplastique sont formées pendant la mise en forme de l'ébauche (100).

5. Un procédé selon la revendication 1 à 4, dans lequel, pendant la mise en forme de l'ébauche (100), la nervure (130) est formée avec au moins deux brides latérales (140) sensiblement droites, formant un angle ou avec un axe Z sensiblement perpendiculaire à un plan de surface supérieure (SP) de l'élément, la nervure faisant saillie dudit plan de surface supérieure (SP), l'angle étant compris entre 0° et 5°, de préférence entre 0,5° et 5°.

6. Un procédé selon la revendication 1 à 5, dans lequel une surface avec des microstructures est formée sur la nervure (130) pendant l'étape de mise en forme de l'ébauche (100).

7. Un procédé selon l'une quelconque des revendications 1 à 7, dans lequel la zone de compression A est située de façon adjacente à la nervure (130).

8. Un procédé selon l'une quelconque des revendications 1 à 7, dans lequel la zone de compression A est située sur un plan de surface supérieure SP de l'ébauche (100) autour et/ou à proximité d'une nervure (130).

9. Un procédé selon les revendications 1 à 8, dans lequel la zone de compression B est située sur un plan de surface inférieure SP' de l'ébauche (100) opposé à un emplacement de la nervure ou proche d'un opposé à un emplacement de la nervure (130).

10. Un ensemble formé par un premier élément (1) et un deuxième élément (1') produits par un procédé selon les revendications 1 à 9, dans lequel l'élément (1) comprend au moins une nervure (130) en matière thermoplastique et une zone de compression A formant une cavité sur l'élément (1), le volume de la cavité étant sensiblement égal au volume de la nervure (130).

11. Un ensemble selon la revendication 12, dans lequel la zone de compression A est située de façon adjacente à la nervure (130).

12. Un ensemble selon la revendication 10 ou la revendication 11, dans lequel la zone de compression A est située sur un plan de surface supérieure SP de l'élément (1) autour et/ou près de la nervure (130).

13. Un ensemble selon l'une quelconque des revendications 10 à 12, dans lequel une zone de compression B est située sur un plan de surface inférieure SP' de l'élément (1) opposé à un emplacement de la nervure ou proche d'un emplacement opposé de la nervure (130).
